# FASCICULE DE BREVET EUROPEEN

(11) **EP 0 547 945 B1**
(45) Date de publication et mention de la délivrance du brevet: **16.08.1995**
(21) Numéro de dépôt: 92403324.4
(22) Date de dépôt: 08.12.1992
(51) Int. Cl.: B60G 21/055

(54) **Palier de barre de torsion à colliers de serrage**
Torsionsstablager mit Spannringen
Torque rod bearing with clamp collars

(30) Priorité: 13.12.1991 FR 9115528
(43) Date de publication de la demande: 23.06.1993
(73) Titulaire: HUTCHINSON, F-75384 Paris Cédex 08 (FR)
(72) Inventeur: Chaussepied, Jean-Noel, F-18100 Vierzon (FR)
(74) Mandataire: Picard, Jean-Claude Georges

(56) Documents cités:
- EP-A- 0 122 891
- EP-A- 0 405 109
- DE-B- 1 119 062
- FR-A- 2 342 425
- US-A- 4 916 749

## Description

La présente invention concerne un palier de barre de torsion, en particulier de barre antidévers pour véhicule automobile, du type comprenant un tube élastique de passage cylindrique pour la barre, et une enveloppe en matériau élastique propre à s'interposer entre ledit tube et une chape rigide de fixation à une structure telle que le châssis dudit véhicule.

Selon le document DE-B-1 119 062, le tube élastique 13-14 est maintenu sur la barre 10 par deux demi-coquilles métalliques 11 et 12 elles-mêmes maintenues en place par deux bagues 15 et 16 enfilées à force sur les coquilles. Ces deux demi-coquilles représentent des pièces métalliques d'un poids non négligeable, ce qui au surplus augmente notablement le prix de revient.

Le document EP-A-0 405 109, comportant les caractéristiques du préambule de la revendication 1, décrit encore une autre technique mettant en oeuvre des pièces métalliques.

Le but de la présente invention est principalement d'empêcher tout glissement en rotation ou en translation d'un palier sur une barre de torsion ou à l'intérieur d'une chape, tout en ayant très peu de pièces métalliques.

A cet effet, ce palier est essentiellement caractérisé en ce que ladite enveloppe et ledit tube sont serrés à leurs extrémités, sur ladite barre, par des colliers de serrage, ladite enveloppe possédant une partie centrale épaisse et des extrémités amincies, aux emplacements prévus pour lesdits colliers ; de préférence il s'agira de colliers à serrage rapide du type à encliquetage de leurs extrémités l'une sur l'autre.

Avantageusement, le tube précité pourra posséder un revêtement interne mince en matériau élastique, éventuellement venu de moulage en même temps que ladite enveloppe.

Selon encore une autre disposition, le palier peut comporter une fente longitudinale traversant ledit tube et ladite enveloppe pour son montage sur la barre par déformation élastique.

Pour renforcer l'action de serrage des colliers et éviter tout glissement axial du palier, on peut prévoir encore que ladite enveloppe possède au moins un bourrelet d'appui périphérique propre à se loger dans une gorge périphérique correspondante de ladite chape.

De même, pour empêcher tout glissement du palier en rotation, on peut prévoir aussi que ladite enveloppe comporte des bourrelets longitudinaux de remplissage destinés à combler les parties anguleuses en retrait que ladite chape laisse à sa jonction avec ledit châssis.

Ces bourrelets, par leur effet de remplissage, auront également pour rôle important de limiter les déformations de l'enveloppe dans la direction périphérique.

Un mode d'exécution de l'invention va maintenant être décrit à titre d'exemple nullement limitatif avec référence aux figures du dessin ci-annexé, dans lequel :
- la figure 1 est une vue en bout d'un palier conforme à l'invention ;
- la figure 2 est une vue en coupe axiale par la ligne II-II de la figure 1 ;
- les figures 3 et 4 sont des vues en coupe transversale, respectivement par les lignes III-III et IV-IV de la figure 2 ; et
- la figure 5 est une vue en perspective montrant le palier et sa chape de montage sur un châssis de véhicule.

A la figure 5, on a référencé en P un palier élastique conforme à l'invention et en C une chape métallique rigide destinée à assujettir ce palier P sur le châssis (non représenté) d'un véhicule, le palier P ayant été préalablement engagé sur une barre de torsion, par exemple une barre antidévers B du véhicule.

Comme on l'a indiqué plus haut, un palier P conforme à l'invention est conçu essentiellement pour qu'il soit empêché de pivoter ou de glisser sur la barre B ou dans la chape C.

A cet effet, le palier est constitué d'un corps central entourant un tube élastique 1 et constitué essentiellement d'une enveloppe en matériau élastique, par exemple en élastomère 2, comportant des extrémités amincies 4. Le tube 1 comporte avantageusement un revêtement interne mince 6 venu de préférence de moulage avec l'enveloppe 2 et destiné à protéger l'intérieur du tube et à éviter le contact métal-métal avec la barre B.

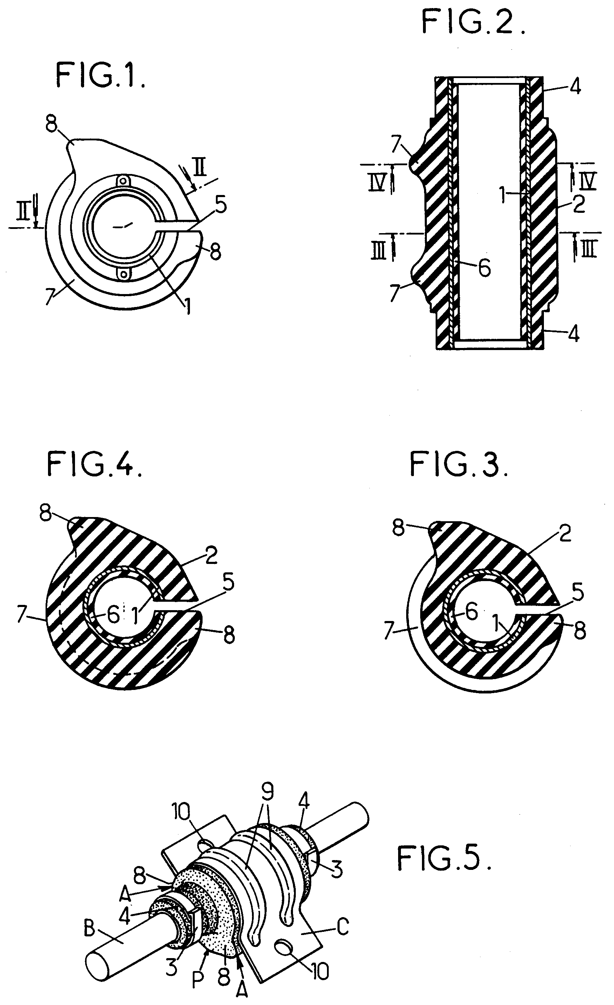

L'enveloppe 2 comporte deux bourrelets 7 s'étendant sur une majeure partie de sa périphérie, et espacés l'un de l'autre comme visible sur la figure 2. L'enveloppe 2 comporte en outre deux bourrelets longitudinaux de remplissage 8 pratiquement opposés l'un à l'autre diamétralement, mais dont bien entendu le décalage angulaire pourrait être tout différent. Enfin, le palier comporte une fente longitudinale 5 traversant le tube 1 et l'enveloppe 2, ce qui permet, par déformation élastique du palier, de l'engager sur la barre B. Ensuite, on met en place la chape C de sorte que les bourrelets d'appui périphériques 7 viennent se loger dans des gorges périphériques correspondantes (apparaissant en saillie à l'extérieur sur la figure 5) de la chape C. Enfin on pourra engager des colliers à serrage rapide 3 sur les deux extrémités amincies 4 du palier, lequel sera alors fermement maintenu d'une part sur la barre par ces colliers, d'autre part dans la chape C, celle-ci étant elle-même fixée sur le châssis du véhicule par des vis ou analogues pénétrant dans les trous 10.

Comme colliers de serrage 3 on pourra utiliser ceux qui sont connus dans le commerce sous l'appellation "Clic", à savoir des colliers dont les extrémités sont fixées l'une sur l'autre par simple encliquetage, et pratiquement sans possibilité de démontage.

Comme on le voit en observant la figure 5, l'intérêt essentiel des bourrelets longitudinaux 8 est de combler les parties anguleuses en retrait A que ladite chape C laisse à sa jonction avec le châssis du véhicule, ceci pour éviter de conférer au palier une trop grande déformabilité sous les efforts de torsion. Bien entendu ces bourrelets 8 coopèrent aussi avec les colliers de serrage 3 pour empêcher toute rotation du palier P sur la barre B et dans la chape C.

## Revendications

1. Palier de barre de torsion, en particulier de barre antidévers pour véhicule automobile, du type comprenant un tube (1) élastique de passage cylindrique pour la barre (B), et une enveloppe en matériau élastique (2) propre à s'interposer entre ledit tube (1) et une chape rigide (C) de fixation à une structure telle que le châssis dudit véhicule, caractérisé en ce que ladite enveloppe (2) et ledit tube (1) sont serrés à leurs extrémités, sur ladite barre, par des colliers de serrage (3), ladite enveloppe (2) possédant une partie centrale épaisse et des extrémités amincies (4), aux emplacements prévus pour lesdits colliers.

2. Palier selon la revendication 1, caractérisé en ce que lesdits colliers de serrage (3) sont des colliers à serrage rapide du type à encliquetage de leurs extrémités l'une sur l'autre.

3. Palier selon la revendication 1 ou 2, caractérisé en ce que ledit tube (1) possède un revêtement interne mince (6) en matériau élastique, éventuellement venu de moulage en même temps que ladite enveloppe (2).

4. Palier selon l'une quelconque des revendications précédentes, caractérisé en ce qu'il comporte une fente longitudinale (5) traversant ledit tube (1) et ladite enveloppe pour son montage sur la barre (B).

5. Palier selon l'une quelconque des revendications précédentes, caractérisé en ce que ladite enveloppe (2) possède au moins un bourrelet d'appui périphérique (7) propre à se loger dans une gorge périphérique (9) correspondante de ladite chape (C).

6. Palier selon l'une quelconque des revendications précédentes, caractérisé en ce que ladite enveloppe (2) comporte des bourrelets longitudinaux de remplissage (8) destinés à combler les parties anguleuses en retrait (A) que ladite chape (C) laisse à sa jonction avec ledit châssis.

## Claims

1. Torsion bar bearing, in particular for an antiroll bar for a motor vehicle, of the type comprising an elastic tube (1) with a cylindrical passage for the bar (B), and a casing made from elastic material (2) suitable for being interposed between the said tube (1) and a rigid shackle (C) for fixing to a structure such as the chassis of the said vehicle, characterised in that the said casing (2) and the said tube (1) are clamped at their ends, on the said bar, by clamping collars (3), the said casing (2) having a thick central part and thinner ends (4), at the locations provided for the said collars.

2. Bearing according to Claim 1, characterised in that the said clamping collars (3) are rapid-clamping collars of the type where their ends snap onto each other.

3. Bearing according to Claim 1 or 2, characterised in that the said tube (1) has a thin internal covering (6) of elastic material, optionally moulded together with the said casing (2).

4. Bearing according to any one of the preceding claims, characterised in that it has a longitudinal slot (5) passing through the said tube (1) and the said casing for it to be mounted on the bar (3).

5. Bearing according to any one of the preceding claims, characterised in that the said casing (2) has at least one peripheral support strip (7) suitable for being housed in a corresponding peripheral groove (9) in the said shackle (C).

6. Bearing according to any one of the preceding claims, characterised in that the said casing (2) has longitudinal filling strips (8) designed to fill in the recessed angular parts (A) which the said shackle (C) leaves at its junction with the said chassis.

## Patentansprüche

1. Torsionsstablager, insbesondere Antineigungsstablager für Kraftfahrzeuge, enthaltend ein zylindrisches, elastisches Durchgangsrohr (1) für den Stab (B), und eine Ummantelung aus elastischem Material (2), die zwischen das Rohr (1) und eine steife Abdeckung (C) zur Befestigung an einem Bauteil, wie beispielsweise dem Raben des Fahrzeugs, eingefügt werden kann, dadurch gekennzeichnet, daß die Ummantelung (2) und das Rohr (1) an ihren Enden am Lager durch Spannringe (3) eingespannt sind, wobei die Ummantelung (2) einen starken Zentralteil und an den für die Ringe vorgesehenen Stellen verjüngte Enden (4) enthält.

2. Lager nach Anspruch 1, dadurch gekennzeichnet, daß die Spannringe (3) Schnellspannringe zur Verklinkung ihrer Enden aufeinander sind.

3. Lager nach Anspruch 1 oder 2, dadurch gekennzeichnet, daß das Rohr (1) eine dünne Innenverkleidung (6) aus elastischem Material besitzt, das unter Umständen zusammen mit der Ummantelung (2) ausgeformt wird.

4. Lager nach einem der vorangegangenen Ansprüche, dadurch gekennzeichnet, daß es einen Längsschnitt (5) enthält, der das Rohr (1) und die Ummantelung zu seiner Montage am Stab (B) kreuzt.

5. Lager nach einem der vorangegangenen Ansprüche, dadurch gekennzeichnet, daß die Ummantelung (2) wenigstens einen Umfangsstützwulst (7) enthält, der sich in einer, in der Abdeckung (C) ausgebildeten Umfangskehle (9) legen kann.

6. Lager nach einem der vorangegangenen Ansprüche, dadurch gekennzeichnet, daß die Ummantelung (2) in Längsrichtung sich erstreckende Füllwulste (8) enthält, die die eckigen Aussparungen (A) ausfüllen können, die die Abdeckung (C) an ihrem Schnittpunkt mit dem Rahmen offenläßt.
